# EUROPÄISCHE PATENTSCHRIFT

(11) **EP 0 956 893 B1**
(45) Veröffentlichungstag und Bekanntmachung des Hinweises auf die Patenterteilung: **16.10.2002**
(21) Anmeldenummer: 99106992.3
(22) Anmeldetag: 09.04.1999
(51) Int. Cl.: B01D 46/52, B01D 46/42

(54) **Filterkassette mit einem in einen biegesteifen Rahmen eingesetzten Filterelement**
Filter cartridge comprising a filter element inserted in a rigid frame
Cassette de filtre comprenant un élément filtrant inséré dans un cadre rigide

(30) Priorität: 14.05.1998 DE 19821676
(43) Veröffentlichungstag der Anmeldung: 17.11.1999
(73) Patentinhaber: Carl Freudenberg KG, 69469 Weinheim (DE)
(72) Erfinder: Schlör, Ulrich, 64297 Darmstadt (DE)

(56) Entgegenhaltungen:
- EP-A- 0 581 735
- DE-A- 2 225 170
- US-A- 5 531 892
- US-A- 5 655 825

## Beschreibung

### Technishes Gebiet

Die vorliegende Erfindung bezieht sich auf eine Filterkassette mit einem biegesteifen Rahmen aus einem einstückigen Zuschnitt und einem darin eingesetzten zick-zack-förmig gefalteten Filterelement. Sie betrifft außerdem ein Verfahren zur Herstellung des Rahmens für die Filterkassette. Filterkassetten dieser Art werden zum Filtern von Luftströmungen und Gasströmungen eingesetzt; u.a. auch bei Fahrzeug-Klimaanlagen.

### Stand der Technik

In der DE-OS 43 23 522 wird eine Filterkassette behandelt, bei der in einem Rahmen aus U-förmigen Streifen ein zickzackförmig gefaltetes Filterelement gehalten ist. Die Herstellung einer solchen Filterkassette, insbesondere des Rahmens, ist relativ aufwendig, da hierfür teuere Werkzeuge erforderlich sind. Die Herstellung der Werkzeuge lohnt nur dann, wenn größere Serien gefertigt werden sollen.

Durch die DE-OS 2 225 170 ist eine Filtergehäuse bekannt geworden, das aus zwei einander gegenüberliegenden Seitenwänden, die einander gegenüberliegende Endbereiche aufweisen, und einem Boden besteht, welcher die beiden Seitenwände verbindet und eine Öffnung besitzt. Die Seitenwände sind mit dem Boden durch Gelenkmittel verbunden. Jede Seitenwand weist eine damit fest verbundene Lippe auf. Außerdem sind Endwände am Gehäuse vorgesehen, welche die Seitenwände übergreifen und die Enden des Filterelements abdichten. Als Werkstoff für die Herstellung des Gehäuses wird ein Kunststoff verwendet. Für die Herstellung des Kunststoffgehäuses ist ein Gießwerkzeug erforderlich. Auch in der US-PS 5,655,825 wird ein gegossenes faltbares Kunststoffgehäuse verwendet.

Eine Herstellung eines Filterrahmens, in den eine zick-zack-förmig gefaltetes Filterelement eingesetzt ist, kann der US-PS 5,531,892 entnommen werden. Der Filterrahmen kann durch Ausstanzen eines Vorrahmens aus einem ebenen Material gebildet werden, der anschließend zu einem Rechteck gefaltet wird. Es entsteht ein einwandiger Rahmen mit Haltetaschen für das Filterelement auf seinen Innenseiten.

Der Erfindung liegt die Aufgabe zugrunde, eine Filterkassette zu schaffen, die besonders einfach gefertigt werden kann, so dass auch geringere Stückzahlen wirtschaftlich herstellbar sind.

Die Lösung der gestellten Aufgabe wird bei einer Filterkassette der eingangs genannten Art mit einem biegesteifen Rahmen und einem darin eingesetzten Filterelement erfindungsgemäß dadurch erreicht, dass Zuschnitt unter Bildung eines doppelwandigen Kastenprofils eingefaltet und mit dem Filterelement verbunden ist, wobei die quer zu den Falten des Filters verlaufenden Innenwandungen des Kastenprofils mit Ausnehmungen versehen sind, in welche die zugehörigen Faltenenden des Filters eingefügt sind. Der wesentliche Gedanke der Erfindung besteht somit darin, dass aus einem ebenen Werkstück ein einstückiger Zuschnitt herausgeschnitten wird, der mit Faltkanten versehen ist. Die Faltkanten sind so angeordnet, dass der Zuschnitt in entsprechender Weise gefaltet, einen Rahmen ergibt, der doppelwandig ausgestaltet ist. In diesen so gebildeten Rahmen wird das Filterelement eingesetzt. Das Filterelement wird eindeutig in seiner Lage im Kastenprofil gehalten und ein Verziehen oder Verschieben des Filterelements wird vermieden.

Es ist vorteilhaft, wenn der Zuschnitt einen ebenen, rechteckigen Basisrahmen umfasst, an den sich durch erste Faltkanten voneinander getrennt in Richtung nach außen die Außenwände, die Stirnwände, die Innenwände und Basislaschen anschließen. Bei der Faltung des Zuschnitts zum Kastenprofil verbleibt der Basisrahmen in der ursprünglichen Ebene des Werkstücks. Durch ein erstes Falten nach oben, entstehen die vier Außenwände, eine zweite und dritte Faltung ergibt die Stirn- und Innenwände. Die Stirnwände liegen in einer Ebene, die parallel zur Ebene des Basisrahmens verläuft. Außen- und Innenwände verlaufen ebenfalls parallel zueinander, jedoch senkrecht zum Basisrahmen und zu den Stirnwänden.

Zumindest zwei einander gegenüberliegende Innenwände sind über zweite Faltkanten mit Laschen verbunden, die mit den anderen übrigen Innenwänden in Eingriff bringbar sind. Über diese Laschen können die Innenwände fest miteinander verbunden werden.

Auch die Außenwände können, vergleichbar wie die Innenwände, mit Laschen versehen sein und miteinander fixiert werden. Es ist jedoch günstiger, wenn die einander benachbarten Außenwände jeweils durch quadratische Eckabschnitte verbunden sind, wobei die Eckabschnitte von weiteren Faltkanten durchbrochen sind, die die Eckabschnitte diagonal durchlaufen und an dem Basisrahmen enden. Beim Faltvorgang zum Kastenprofil entstehen durch die Eckabschnitte zusätzliche Laschen, die mit den Außenwänden entsprechend fixiert, zur Versteifung des gesamten Rahmens beitragen.

Die an den Innenwänden vorhandenen Basislaschen werden bei der Faltung oberflächenbündig an den Basisrahmen angelegt und unlösbar damit verbunden. Die Basislaschen sind an allen vier Innenwänden vorhanden und tragen zur Versteifung des Basisrahmens bei.

Der Basisrahmen ist in seiner Breite größer als die breite der Stirnwände. Daraus ergibt sich, dass das in das Kastenprofil eingesetzte Filterelement durch den Basisrahmen gehalten wird. Es ist folglich möglich, in den durch die Faltung gebildeten Rahmen ein vorgefertigtes Filterelement einzulegen und die Filterkassette ist gebrauchsfertig.

In bevorzugter Ausführungsform werden der Rahmen und das Filterelement aus gleichem Material gefertigt, danach zusammengesteckt und gegebenenfalls miteinander verklebt.

In vielen Fällen ist es üblich, dass zwischen dem Filterrahmen und der dazugehörigen Halterung eine Dichtung verwendet wird, um ungewollte Seitenströmungen der Luft zu verhindern. In weiterer Ausgestaltung des Erfindungsgedankens sind beim vorliegenden Kastenprofil die Außenwände mit mehreren Schlitzen zur Befestigung einer den Rahmen einfassenden Dichtungsmasse versehen. Diese Dichtungsmasse kann beispielsweise ein Vliesstoff sein, der um den Rahmen gelegt wird und der abschnittsweise in die Schlitze der Außenwände eingedrückt ist. Dadurch kann eine sehr einfache Abdichtung der Filterkassette in ihrer Halterung erreicht werden. Die Schlitze werden in ihrer Länge entsprechend dem verwendeten Dichtungsmaterial definiert und werden an ihren Enden mit Löchern versehen, die zu einem federförmigen Umbiegen der Schlitzränder beitragen. Durch das Eindrücken der Dichtungsmasse in den Schlitz, werden die Schlitzränder nach innen gebogen und stemmen sich einem Herausziehen der Dichtungsmasse aus den Schlitzen entgegen. Bei Kastenprofilen größeren Ausmaßes ist es günstig, wenn in den Außenwänden mindestens zwei Schlitzreihen vorgesehen sind. Dadurch kann die Dichtungsmasse an ihren oberen und unteren Randabschnitten sicher an der Außenwand gehalten werden.

Es ist möglich, die neue Filterkassette über entsprechend ausgebildete Stanzwerkzeuge zu erstellen. Der besondere Vorteil bei der Herstellung des Rahmens besteht jedoch darin, daß der Zuschnitt für den Rahmen aus einem ebenen Werkstück hergestellt werden kann unter Verwendung eines Industrieplotters. Hierbei können heute übliche Technologien zur Anwendung kommen. Zum Beispiel kann das Ausschneiden des Profils durch Messer- oder Laserstrahlen vollzogen werden. Auch die Faltkanten können auf diese Weise hergestellt werden, ebenso die Perforation, soweit erforderlich.

Anhand eines in der Zeichnung dargestellten Ausführungsbeispiels wird die Erfindung näher erläutert.

### Kurzbeschreibung der Zeichnungen

Es zeigt
- Fig. 1: die Filterkassette in perspektivischer Ansicht;
- Fig. 2: einen Zuschnitt für die Bildung des Kastenprofils und
- Fig. 3: einen Querschnitt durch die Filterkassette.

### Ausführung der Erfindung

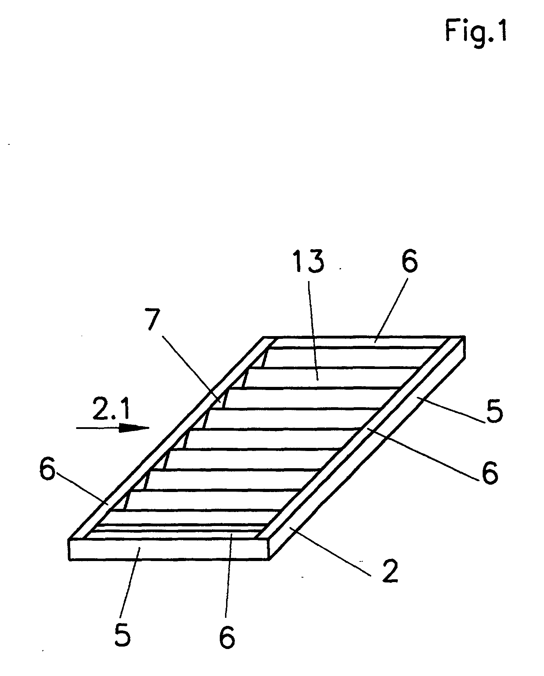

Die in Fig. 1 gezeigte Filterkassette 21 wird im wesentlichen aus dem Kastenprofil 2 und dem darin eingesetzten Filterelement 13 gebildet. Das Filterelement 13 besteht aus einer zickzackförmig gefalteten kontinuierlichen Bahn aus Vliesstoff. Das Kastenprofil 2 ist doppelwandig mit den Außenwänden 5 und Innenwänden 7. Sichtbar sind auch die Stirnwände 6 zwischen den Außen- und Innenwänden. Das Kastenprofil ist ebenfalls aus Vliesstoff hergestellt. Das Filterelement 13 und Kastenprofil 2 sind fest miteinander verbunden.

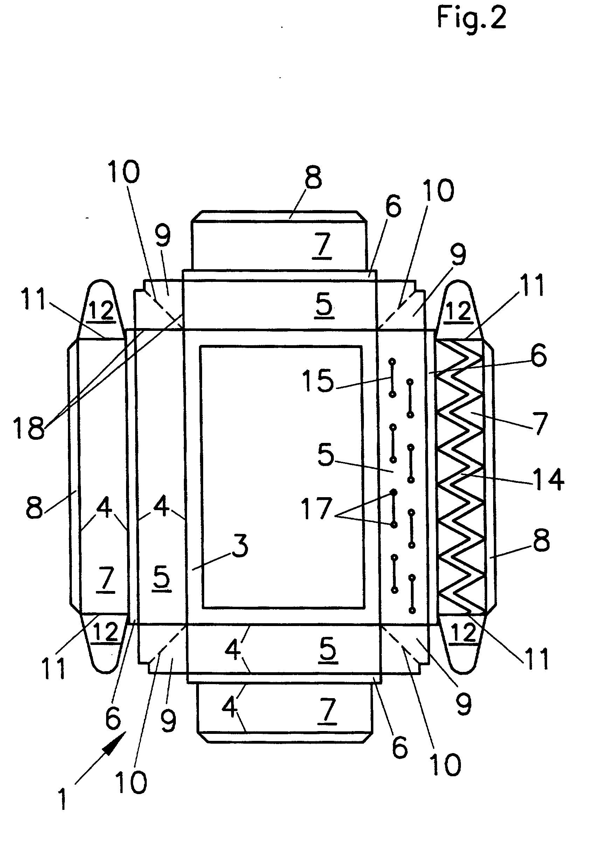

Die Fig. 2 zeigt den Zuschnitt 1 in abgewickelter Form, d.h. in einer Ebene. Das Werkstück, aus dem dieser Zuschnitt 1 herstellbar ist, wird aus einer ebenen Vliesstoffbahn gebildet. Aus dieser wird der Zuschnitt 1 herausgeschnitten und mit den dazugehörigen Faltkanten 4 versehen. Von der Mitte heraus gesehen, besteht der Zuschnitt 1 aus einem ebenen, etwa rechteckigen Basisrahmen 3. An diesen Basisrahmen 3 schließen als erste Abschnitte Teile an, die die späteren Außenwände 5 bilden. Hierauf folgen die Stirnwände 6, die im gefalteten Zustand parallel zum Basisrahmen 3 zu liegen kommen. Dort schließen Teile an, die später im gefalteten Zustand die Innenwände 7 darstellen. Außenwände 5 und Innenwände 7 kommen parallel zueinander zu liegen. Die Basislaschen 8 der Außenwände 7 werden mit dem Basisrahmen 3 verbunden. Dieses kann durch Heißversiegeln oder Verkleben vorgenommen werden. Die ersten Faltkanten 4 geben die vorgesehene Faltweise von Innen-und Außenwände 7 bzw. 5 sowie der Stirnwände 6 und der Basislaschen 8 vor.

Die beiden in Längsrichtung der Filterkassette 21 liegenden Innenwände 7 haben die Laschen 12, die über zweite Faltkanten 11 mit dem Innenwänden 7 verbunden sind. Im gefalteten Zustand kommen die Laschen 12 an den quer zur Filterkassette 21 liegenden Innenwänden 7 zur Anlage. durch einen Klebstoff werden die Laschen 12 mit den querliegenden Innenwänden 7 verbunden.

An den einander benachbarten Außenwänden 5 sind Eckabschnitte 9 vorhanden. Zwischen den Eckabschnitten 9 und den Außenwänden 5 sind die Faltkanten 18. Außerdem haben die Eckabschnitte 9 weitere Faltkanten 10, welche die Eckabschnitte 9 diagonal durchlaufen. Diese Faltkanten 10 sind perforiert. Während des Faltvorganges zum Kastenprofil 2 werden die Faltkanten 10 nach innen in das Kastenprofil gezogen. Dabei ist es günstig, wenn die dann aus den Eckabschnitten 9 entstehenden Laschen an der längsverlaufenden Außenwand 5 zum Anliegen kommen und daran fixiert werden.

Die Basislaschen 8 werden nach außen gefaltet und an den Basisrahmen 3 angelegt und mit letzterem verbunden. Durch den gesamten Faltvorgang entsteht ein Rahmen 20 in Form eines doppelwandigen Kastenprofils 2, in den ein entsprechend ausgebildetes Filterelement eingefügt werden kann. Die Innenwände 5 und 7 des Kastenprofils können, wie auf der rechten Seite der Figur gezeigt, mit Ausnehmungen 14 beziehungsweise Schlitzen 15 zur Halterung des Filterelements 13 bzw. einer den Rahmen 20 umgebenden Dichtungsmasse 16 versehen sein.

In den sich gegenüberliegenden Innenwandungen 7 des Kastenprofils 2 ist eine zickzackförmige verlaufende Ausnehmung 14 eingeschnitten. In diese Ausnehmung werden die außenliegenden Enden des Filterelements 13 eingefügt. Das Filterelement 13 erhält dadurch nicht nur einen Halt im Kastenprofil 2 sondern es kann auch seine Faltung vorgegeben und fixiert werden.

Zur Befestigung einer Dichtungsmasse, insbesondere eines Dichtungsvlieses 16, ist die gesamte Außenwand 5 mit den Schlitzen 15 versehen, in die ein Teil der Dichtungsmasse 16 eingeschoben wird. Die Löcher 17 an den Schlitzenden erlauben eine definierte Ausbildung der Schlitzlippen, so daß die Dichtungsmasse 16 darin gut gehalten wird.

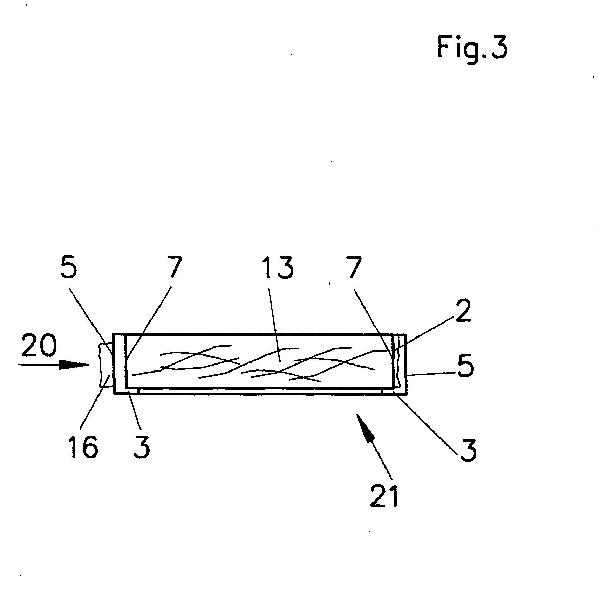

Die Fig. 3 zeigt einen Querschnitt durch die Filterkassette 21. Der Rahmen 20 wird durch das Kastenprofil 2 gebildet mit den Innenwänden 7 und den Außenwänden 5. Der Basisrahmen 3 ragt über die Innenwände 7 in den Innenraum des Kastenprofils 2. Das Filterelement 13 ist in den Rahmen 20 eingefügt. Seine äußeren Enden können, wie auf der rechten Seite der Figur angedeutet, in den Raum zwischen den Wänden 7 und 5 hineinragen, in dem sie durch die Ausnehmungen 14 hindurchgesteckt sind.

Auf der linken Seite der Figur ist die Dichtungsmasse 16 miteingezeichnet, von der Teile durch die Schlitze 15 hindurchgesteckt und ebenfalls in den Innenraum zwischen den Wandungen 5 und 7 hineinreichen.

## Patentansprüche

1. Filterkassette, umfassend einen biegesteifen Rahmen aus einem einstückigen Zuschnitt und ein darin eingesetztes, zick-zack-förmig gefaltetes Filterelement, **dadurch gekennzeichnet, dass** der Zuschnitt (1) unter Bildung eines doppelwandigen Kastenprofils (2) eingefaltet und mit dem Filterelement (13) verbunden ist, wobei die quer zu den Falten des Filters verlaufenden Innenwandungen (7) des Kastenprofils (2) mit Ausnehmungen (14) versehen sind, in welche die zugehörigen Faltenenden des Filterelements (13) eingefügt sind.

2. Filterkassette nach Anspruch 1, **dadurch gekennzeichnet, dass** der Zuschnitt (1) einen ebenen, rechteckigen Basisrahmen (3) umfasst, an den sich durch erste Faltkanten (4) voneinander getrennt in Richtung nach außen die Außenwände (5), die Stirnwände (6), die Innenwände (7) und Basislaschen (8) anschließen.

3. Filterkassette nach Anspruch 1, **dadurch gekennzeichnet, dass** zumindest zwei einander gegenüberliegende Innenwände (7) über zweite Faltkanten (11) mit Laschen (12) verbunden sind, die mit den übrigen Innenwänden (7) in Eingriff bringbar sind.

4. Filterkassette nach einem der Ansprüche 1 bis 3, **dadurch gekennzeichnet, dass** die einander benachbarten Außenwände (5) jeweils durch quadratische Eckabschnitte (9) verbunden sind und dass die Eckabschnitte (9) von weiteren Faltkanten (10) durchbrochen sind, die die Eckabschnitte (9) diagonal durchlaufen und an dem Basisrahmen (3) enden.

5. Filterkassette nach einem der Ansprüche 1 bis 4, **dadurch gekennzeichnet, dass** die Basislaschen (8) oberflächenbündig an den Basisrahmen (3) angelegt und unlösbar damit verbunden sind.

6. Filterkassette nach einem der Ansprüche 1 bis 5, **dadurch gekennzeichnet, dass** der Rahmen (20) und das Filterelement (13) aus gleichem Material hergestellt wird.

7. Filterkassette nach einem der Ansprüche 1 bis 6, **dadurch gekennzeichnet, dass** das Filterelement (13) und das Kastenprofil (2) zusammengesteckt und gegebenenfalls miteinander verklebt sind.

8. Filterkassette nach einem der Ansprüche 1 bis 7; **dadurch gekennzeichnet, dass** die Außenwände (5) mit mehreren Schlitzen (15) zur Befestigung einer den Rahmen (20) einfassenden Dichtungsmasse (16) versehen ist.

9. Filterkassette nach einem der Ansprüche 1 bis 8, **dadurch gekennzeichnet, dass** die Schlitze (15) an ihren Enden runde Löcher (17) haben.

10. Filterkassette nach einem der Ansprüche 1 bis 9, **dadurch gekennzeichnet, dass** in jeder Außenwand (5) mindestens zwei Schlitzreihen vorgesehen sind.

11. Verfahren zur Herstellung eines Rahmens für eine Filterkassette nach einem der Ansprüche 1 bis 10, **dadurch gekennzeichnet, dass** der Zuschnitt (1) für den Rahmen (20) aus einem ebenen Werkstück unter Verwendung eines Industrieplotters gebildet wird.

## Claims

1. A filter cartridge comprising a flexurally rigid frame made from a single-piece blank and a filter element which is folded into a zigzag shape and is inserted therein, **characterized in that** the blank (1) is folded in to form a double-walled box profile (2) and is joined to the filter element (13), the inner walls (7) of the box profile (2) which run transversely to the filter folds being provided with recesses (14) into which are inserted the associated fold ends of the filter element (13).

2. A filter cartridge according to claim 1, **characterized in that** the blank (1) comprises a flat, rectangular base frame (3), to which are joined, separated from one another by first folding edges (4) in an outward direction, the outer walls (5), the end walls (6), the inner walls (7) and base tongues (8).

3. A filter cartridge according to claim 1, **characterized in that** at least two mutually opposite inner walls (7) are connected via second folding edges (11) to tongues (12) which can be engaged with the remaining inner walls (7).

4. A filter cartridge according to any one of claims 1 to 3, **characterized in that** the mutually adjacent outer walls (5) are each joined by square corner sections (9) and **in that** the corner sections (9) are perforated by further folding edges (10) which pass diagonally through the corner sections (9) and end at the base frame (3).

5. A filter cartridge according to any one of claims 1 to 4, **characterized in that** the base tongues (8) are flush to the surface of the base frame (3) and are non-detachably joined thereto.

6. A filter cartridge according to any one of claims 1 to 5, **characterized in that** the frame (20) and the filter element (13) are made from the same material.

7. A filter cartridge according to any one of claims 1 to 6, **characterized in that** the filter element (13) and the box profile (2) are fitted together and if appropriate are glued together.

8. A filter cartridge according to any one of claims 1 to 7, **characterized in that** the outer walls (5) are provided with a plurality of slots (15) for fixing a sealing compound (16) which bounds the frame (20).

9. A filter cartridge according to any one of claims 1 to 8, **characterized in that** the slots (15) have round holes (17) at their ends.

10. A filter cartridge according to any one of claims 1 to 9, **characterized in that** at least two rows of slots are provided in each outer wall (5).

11. A process for producing a frame for a filter cartridge according to any one of claims 1 to 10, **characterized in that** the blank (1) for the frame (20) is formed from a flat workpiece using an industrial plotter.

## Revendications

1. Cassette de filtre, comprenant un cadre rigide à la flexion, fabriqué à partir d'une pièce découpée en une seule pièce, et un élément filtrant plié en forme de zigzag, inséré dedans, **caractérisée en ce que** la pièce découpée (1) est pliée en formant un profil de boîte (2) à paroi double et est reliée à l'élément filtrant (13), les parois internes (7) du profil de boîte (2) passant perpendiculairement aux plis du filtre étant dotées d'évidements (14) dans lesquels sont insérées les extrémités de plis associées de l'élément filtrant (13).

2. Cassette de filtre selon la revendication 1, **caractérisée en ce que** la pièce découpée (1) comprend un cadre de base rectangulaire, plat (3) auquel se raccordent les parois externes (5), les parois frontales (6), les parois internes (7) et les attaches de base (8) en étant séparées les unes des autres par des premières arêtes de pliage en direction de l'extérieur.

3. Cassette de filtre selon la revendication 1, **caractérisée en ce qu'**au moins deux parois internes (7) se faisant face l'une l'autre sont reliées par des deuxièmes arêtes de pliage (11) à des attaches (12), qui peuvent venir en prise avec les parois internes (7) restantes.

4. Cassette de filtre selon l'une des revendications 1 à 3, **caractérisée en ce que** les parois externes (5) contiguës les unes aux autres sont reliées à chaque fois par des segments angulaires carrés (9) et **en ce que** les segments angulaires (9) sont traversés par d'autres arêtes de pliage (10) qui traversent diagonalement les segments angulaires (9) et se terminent au cadre de base (3).

5. Cassette de filtre selon l'une des revendications 1 à 4, **caractérisée en ce que** les attaches de base (8) sont placées en affleurement de surface sur le cadre de base (3) et y sont reliées de façon indétachable.

6. Cassette de filtre selon l'une des revendications 1 à 6, **caractérisée en ce que** le cadre (20) et l'élément filtrant (13) sont fabriqués dans la même matière.

7. Cassette de filtre selon l'une des revendications 1 à 6, **caractérisée en ce que** l'élément filtrant (13) et le profil de boîte (2) sont assemblés et collés ensemble le cas échéant.

8. Cassette de filtre selon l'une des revendications 1 à 7 ; **caractérisée en ce que** les parois externes (5) sont dotées de plusieurs fentes (15) pour fixer une masse d'étanchéité (16) entourant le cadre (20).

9. Cassette de filtre selon l'une des revendications 1 à 8, **caractérisée en ce que** les fentes (15) ont des trous ronds (17) à leurs extrémités.

10. Cassette de filtre selon l'une des revendications 1 à 9, **caractérisée en ce que** dans chaque paroi externe (5) sont prévues au moins deux rangées de fentes.

11. Procédé de fabrication d'un cadre pour une cassette de filtre selon l'une des revendications 1 à 10, **caractérisé en ce que** la pièce découpée (1) pour le cadre (20) est formée à partir d'une pièce à usiner plane en utilisant un traceur de courbes industriel.
